# EUROPEAN PATENT APPLICATION

(11) **EP 4 632 828 A2**
(43) Date of publication of application: **15.10.2025**
(21) Application number: 25168980.8
(22) Date of filing: 07.04.2025
(51) Int. Cl.: H01M 4/04, B26D 5/00, B65D 5/00, B65H 18/10, B65H 23/02, B65H 23/038, H01M 10/04

(54) **ROLL-TO-ROLL MANUFACTURING METHOD OF ELECTRODES FOR SECONDARY BATTERIES**

(30) Priority: 09.04.2024 KR 20240048296
(71) Applicant: SK On Co., Ltd., Seoul 03161 (KR)
(72) Inventor: BAE, Joon Ho, 34124 Daejeon (KR); KANG, Hyun Min, 34124 Daejeon (KR); KIM, Song Hyeon, 34124 Daejeon (KR)
(74) Representative: Stolmár & Partner Patentanwälte PartG mbB

(57) **Abstract**

Proposed is a roll-to-roll manufacturing method of electrodes for secondary batteries including material supplying for supplying an electrode material from an unwinder, meander correcting for correcting meandering in a movement path of the electrode material, notching processing for forming an electrode tab shape by processing a tab fabrication area of the electrode material, cleaning the electrode material, vision inspection for determining whether the electrode material is of good quality, and electrode material winding for winding the electrode material with a rewinder.

## Description

### CROSS REFERENCE TO RELATED APPLICATION

The present application claims priority to Korean Patent Application No. 10-2024-0048296, filed April 09, 2024, the entire contents of which is incorporated herein for all purposes by this reference.

### BACKGROUND OF THE INVENTION

### Field of the Invention

The present disclosure relates to a roll-to-roll manufacturing method of electrodes for secondary batteries.

### Description of the Related Art

In general, a secondary battery is a battery that can be used repeatedly through the process of discharging that converts chemical energy into electrical energy and charging during which the chemical reactions are reversed. Various types of secondary batteries continue to be developed, such as nickelcadmium (Ni-Cd) batteries, nickel-hydrogen (Ni-MH) batteries, lithium-metal batteries, lithium-ion (Ni-Ion) batteries, and lithium-ion polymer batteries (hereinafter referred to as "LIPB").

Recently, secondary batteries have been attracting attention as a popular energy source as they are widely used in IT products, automobiles, and energy storage fields. In the field of IT products, secondary batteries are required to be able to be used continuously and for long stretches of time, and miniaturization and weight reduction are also important, while the automotive field requires high power, durability, and stability to eliminate explosion risks. In the energy storage field, secondary batteries are used for storing excess power produced by wind and solar generation, etc., and since a battery is used in a fixed manner, more relaxed conditions may be applied.

Processing and manufacturing of electrode materials, which are the core components of secondary batteries, are very important factors in the performance and quality of the secondary batteries, and many efforts have been made to speed up and increase the stability of the manufacturing of the secondary battery electrode materials.

### Document of Related Art

(Patent Document 1) Korean Patent Application Publication No. 10-2011-0133161

### SUMMARY OF THE INVENTION

According to an aspect of the present disclosure, provided is a roll-to-roll manufacturing method of electrodes for secondary batteries, enabling high-speed production by rapidly forming electrode tabs through notching processing using a laser in a roll-to-roll electrode manufacturing facility.

In addition, provided is a roll-to-roll manufacturing method of electrodes for secondary batteries, enabling additional processing of a separate molding portion required for an electrode material as well as an electrode tab using a laser.

In addition, provided is a roll-to-roll manufacturing method of electrodes for secondary batteries, enabling to reduce the total number of processes for secondary battery production and improve product productivity by performing a notching process and a separate laser forming process together.

A roll-to-roll manufacturing method of electrodes for secondary batteries according to an embodiment of the present disclosure may include: material supplying for supplying an electrode material from an unwinder; meander correcting for correcting meandering in a movement path of the electrode material; notching processing for forming an electrode tab shape by processing a tab fabrication area of the electrode material; cleaning the electrode material; vision inspection for determining whether the electrode material is of good quality; and electrode material winding for winding the electrode material with a rewinder.

In this case, the meander correction step for correcting meandering in the movement path of the electrode material may include detecting a line edge position of the electrode material by an edge position sensor (EPS) and correcting meandering of the electrode material by using an edge position control (EPC) roller.

In addition, the notching processing step for forming the electrode tab shape of the electrode material may include notching the electrode material by at least one laser scanner positioned at one or both ends of a width direction of the electrode material.

In addition, the notching processing step for forming the electrode tab shape of the electrode material may include notching a tab fabrication area of a first end of the width direction of the electrode material and notching a molding portion of a second end of the width direction of the electrode material simultaneously or sequentially.

In addition, the cleaning the electrode material step may include: ultrasonic cleaning for applying ultrasonic waves to the electrode material; and suction cleaning for sucking foreign substances from the electrode material.

In addition, the cleaning the electrode material step may include brushing, between the step of ultrasonic cleaning for applying ultrasonic waves to the electrode material and the step of suction cleaning for sucking foreign substances from the electrode material, for removing foreign substances from a surface of the electrode material using a brush.

In addition, the vision inspection step for determining whether the electrode material is of good quality may include: general inspection for determining whether foreign substances remain in the electrode material by means of a first vision part; and determining whether a meander correction value obtained from the meander correction step matches by means of a second vision part.

In addition, the method may further include: controlling, by a first controller, the meander correction step for correcting the meandering in the movement path of the electrode material; controlling, by a second controller, the step for determining whether the meander correction value obtained from the meander correction step matches a meander correction value measured by the second vision part; and transmitting whether the meander correction values match determined under the control of the second controller to the first controller and adjusting the meander correction step for the electrode material by the first controller.

In addition, the cleaning the electrode material step may include controlling the cleaning step by the second controller on the basis of the results of the vision inspection step for determining whether the electrode material is of good quality.

In addition, the method may further include: guiding for adjusting a conveyance position of the electrode material by an air guide; and sucking foreign substances for removing foreign substances from the tab fabrication area of the electrode material, after the meander correction step for correcting the meandering in the movement path of the electrode material and before the notching processing step for forming the electrode tab shape by processing the tab fabrication area of the electrode material.

In addition, the guiding for adjusting the conveyance position of the electrode material by the air guide may include spraying air in opposite end directions perpendicular to a conveying direction of the electrode material.

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, by combining a roll-to-roll method and electrode material notching processing using a laser scanner in secondary battery manufacturing, a faster secondary battery electrode manufacturing process can be realized.

Furthermore, by performing meander correction for an electrode material supplied from an unwinder and confirming and inspecting the meander correction again before the electrode material is wound on a winding roller, it is possible to improve the reliability of a manufacturing process using a roll-to-roll method, and effectively perform winding of electrode materials.

Furthermore, by effectively performing an electrode material notching process by cleaning the surface of an electrode material moving in a roll-to-roll manner and preventing deformation such as curling or pushing at opposite ends of an electrode material in advance, the productivity of good electrode materials can be increased.

Furthermore, since electrode material notching is performed using a laser scanner, physical interference with the horizontal movement of electrode materials can be minimized, and the process speed for electrode materials in the roll-to-roll method can be effectively increased.

Furthermore, due to a system that feeds the vision inspection results of an electrode material back to the process of an electrode material cleaning step, the productivity of good products through the electrode material cleaning step can be increased.

### BRIEF DESCRIPTION OF THE DRAWINGS

FIG. 1 is a flowchart showing the process of a roll-to-roll manufacturing method of electrodes for secondary batteries according to an embodiment of the present disclosure.
FIG. 2 is a schematic view showing the process of a roll-to-roll manufacturing method of electrodes for secondary batteries according to an embodiment of the present disclosure.
FIG. 3 is a schematic view showing the schematic configuration of the process of part A of FIG. 2.
FIG. 4 is a schematic view showing the schematic configuration of the process of part B of FIG. 2.
FIG. 5 is a schematic view showing the schematic configuration of the process of part C of FIG. 2.
FIG. 6 is a schematic view showing the schematic configuration of the process of part D of FIG. 2.

### DETAILED DESCRIPTION OF THE INVENTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Hereinafter, an embodiment of the present disclosure will be described in detail with reference to the attached drawings.

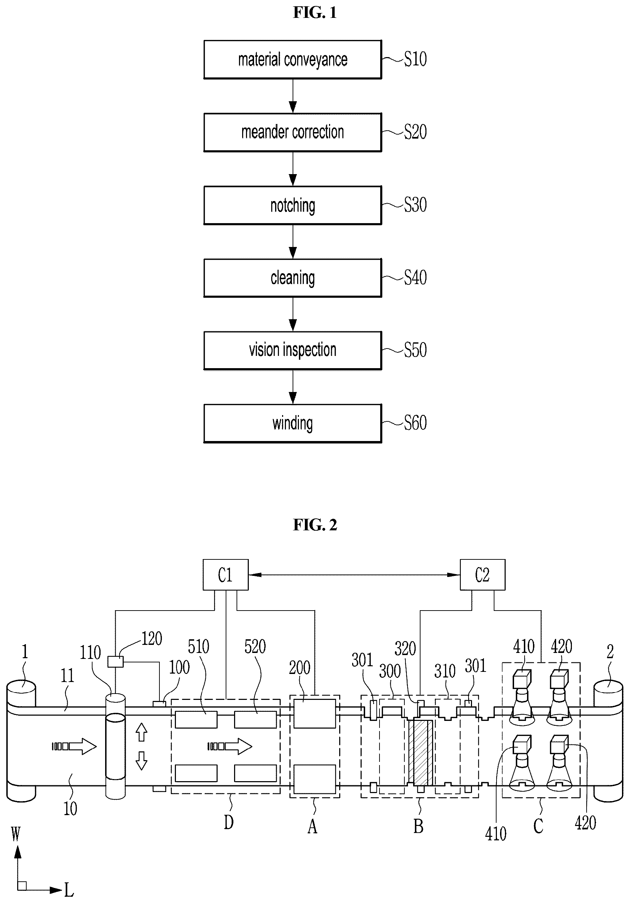

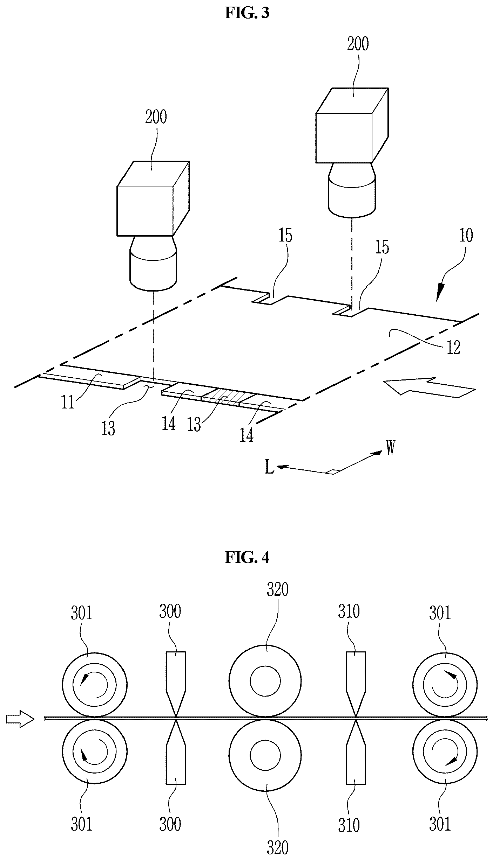

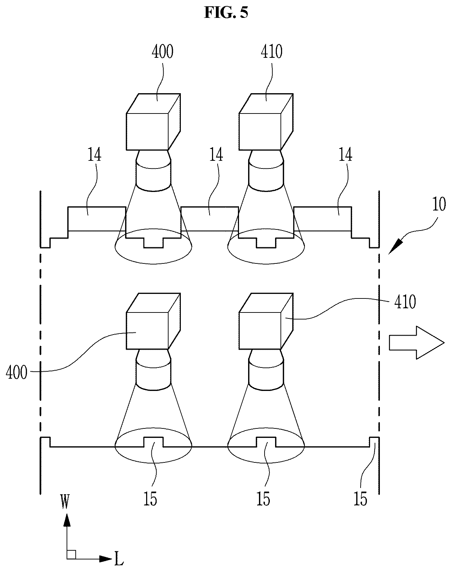

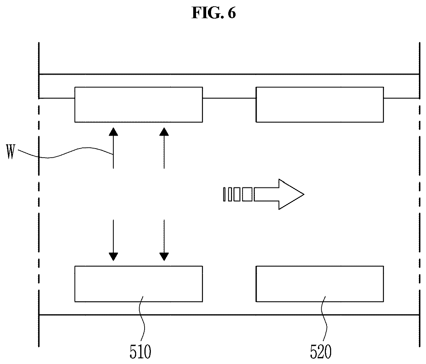

FIG. 1 is a flowchart showing the process of a roll-to-roll manufacturing method of electrodes for secondary batteries according to an embodiment of the present disclosure; FIG. 2 is a schematic view showing the process of a roll-to-roll manufacturing method of electrodes for secondary batteries according to an embodiment of the present disclosure; FIG. 3 is a schematic view showing the schematic configuration of the process of part A of FIG. 2; FIG. 4 is a schematic view showing the schematic configuration of the process of part B of FIG. 2; FIG. 5 is a schematic view showing the schematic configuration of the process of part C of FIG. 2; and FIG. 6 is a schematic view showing the schematic configuration of the process of part D of FIG. 2.

As shown in FIG. 1, a roll-to-roll manufacturing method of electrodes for secondary batteries according to an embodiment of the present disclosure may include: a material supply step for supplying an electrode material 10 from an unwinder 1; a meander correction step for correcting meandering in the movement path of the electrode material 10; a notching processing step for forming an electrode tab shape 14 by processing a tab fabrication area 13 of the electrode material 10; a cleaning step for cleaning the electrode material 10; a vision inspection step for determining whether the electrode material 10 is of good quality; and an electrode material 10 winding step for winding the electrode material 10 with a rewinder 2.

First, the material supply step for supplying the electrode material 10 from the unwinder 1 will be described.

As shown in FIG. 2, as the electrode material 10 rolled in the unwinder 1 is unwound, the electrode material 10 is fed into the electrode manufacturing process. The electrode material 10 is introduced along a movement path for the electrode manufacturing process, and each process may be performed sequentially in a roll-to-roll manner.

In this case, the electrode material 10 wound around the unwinder 1 is in an unprocessed film state before tapping, and may be supplied in a fashion in which the electrode material 10 is continuously conveyed along a preset path while being unrolled from the unwinder 1. At this time, the unwinder 1 may be rotated by tension applied to the electrode material 10 being unwound without separate power source.

In the material conveyance step (S10), the electrode material 10 may be conveyed while maintaining tension due to driving of the rewinder 2 placed on the opposite side of the unwinder 1.

Next, the meander correction step for correcting meandering in the movement path of the electrode material 10 will be described.

During the process in which the electrode material 10 is unrolled from the unwinder 1 and supplied to the electrode manufacturing process, meandering of the electrode material 10 may occur. At this time, the reliability of the subsequent manufacturing process may be ensured due to the meander correction step that corrects the meandering of the electrode material 10.

In the meander correction step, by precisely controlling the movement path of the electrode material 10, the reliability of the notching of the tab fabrication area 13 of the electrode material 10 that is performed thereafter may be ensured, and all other processes, that is, cleaning or vision inspection, may be performed accurately for the electrode material 10.

As shown in FIG. 2, the meander correction step for the electrode material 10 may include a step of detecting the line edge position of the electrode material 10 by an edge position sensor (EPS) 100 and correcting meandering of the electrode material 10 by using an edge position control (EPC) roller 110. On the basis of the preset value of the normal path along which the electrode material 10 moves, the EPS 100 senses the position value of the edge portions of opposite ends in the width direction of the electrode material 10, and accordingly, the EPC roller 110 may control the conveying path of the electrode material 10. The EPC roller 110 may be moved forward or backward in a direction that matches the width direction of the electrode material 10 by a driving motor 120.

The driving motor 120 may be controlled by a first controller C1. The first controller C1 may receive a measurement value from the EPS 100 and, when the first controller C1 determines that the electrode material 10 is progressing in a meandering manner, may control the driving motor 120 to move the EPC roller 110 so that the meandering electrode material 10 may proceed normally. In this case, the first controller C1 may be provided to control the meander correction.

For example, when meandering occurs in the electrode material 10 and one end of the electrode material 10 deviates from the normal path, at least one EPS 100 detects the line edge of the electrode material 10 and sends the measurement value to the first controller C1, and the first control controller C1 controls the driving motor 120 to move the EPC roller 110 in the direction in which the meandering is corrected.

As the EPC roller 110 moves, the path of the electrode material 10 that is progressing while meandering may be corrected by the frictional force between the EPC roller 110 and the electrode material 10.

Next, the notching processing step for forming the electrode tab shape 14 by processing the tab fabrication area 13 of the electrode material 10 will be described.

As shown in FIG. 3, a step of notching the electrode material 10 by at least one laser scanner 200 positioned at one or both ends of the width direction of the electrode material 10 may be included.

In the notching processing step (S30), the tab fabrication area 13 formed in an uncoated portion 11 of the electrode material 10 may be removed by tapping at a preset interval using the laser scanner 200 capable of laser processing. When a plurality of tab fabrication areas 13 is removed from a continuously connected film-type electrode material 10, a plurality of electrode tab shape 14 areas may be formed at preset intervals in the electrode material 10 along a conveying direction L.

In the notching processing step (S30), at least one of one end and the other end of the electrode material 10 may be shorn by a plurality of laser scanners 200 spaced apart in a width direction W of the electrode material 10.

Thus, according to the notching processing step (S30), by means of the laser scanner 200, it is possible to shear the uncoated portion 11 of one end of the electrode material 10, and it is also possible to shear a coated portion 12 of the other end of the electrode material 10.

That is, a step of notching the tab fabrication area 13 of one end of the width direction of the electrode material 10 and notching a molding portion 15 of the other end of the width direction of the electrode material 10 simultaneously or sequentially may be included.

In this case, the molding portion 15 area of the electrode material 10 may be processed by chamfering to prevent physical damage or risk to the corners of a unit electrode sheet when the electrode material 10 is cut into unit electrode sheets after tapping.

Next, the cleaning step for cleaning the electrode material 10 will be described.

As shown in FIG. 4, the cleaning step for cleaning the electrode material 10 may include: an ultrasonic cleaning step for applying ultrasonic waves to the electrode material 10; and a suction cleaning step for sucking foreign substances from the electrode material 10.

In the ultrasonic cleaning step for applying ultrasonic waves to the electrode material 10, a process of providing ultrasonic waves toward the electrode material 10 by arranging ultrasonic generators 300 above and below the electrode material 10 moving along a preset path by a plurality of conveying rollers 301 may be performed.

The ultrasonic generator 300 may be provided one above and one below the electrode material 10, but may also be provided in multiple units above and below as needed. The ultrasonic waves applied to the electrode material 10 vibrate the electrode material 10, and foreign substances remaining in the electrode material 10 during the notching process may be removed by the vibration.

For reference, "above" the electrode material 10 may refer to the upper direction in the drawing based on the electrode material 10, and "below" may refer to the lower direction based on the electrode material 10.

Next, in the suction cleaning step for the electrode material 10, a process of sucking up foreign substances that remain in the electrode material 10 and are not removed even after the ultrasonic cleaning step may be performed.

A suction device 310 may be provided one above and one below the electrode material 10, but may also be provided in multiple units spaced apart from each other above and below the electrode material 10 as needed to improve the efficiency of suctioning foreign substances.

The cleaning step for cleaning the electrode material 10 may include a brushing step for removing foreign substances from the surface of the electrode material 10 between the ultrasonic cleaning step for applying ultrasonic waves to the electrode material 10 and the suction cleaning step for sucking foreign substances from the electrode material 10.

In the brushing step, the surface of the electrode material 10 may be cleaned using a physical brush 320. In the case of foreign substances that are not removed using a non-contact method such as suctioning, the foreign substances may be forcibly removed and separated using physical force through the brushing step.

In this case, the contact strength of the brush 320 with the electrode material 10 may be controlled by the second controller C2 in consideration of the physical properties of the electrode material 10, and it would be appropriate to perform the brushing within a range where the electrode material 10 is not physically deformed or damaged.

In addition, foreign substances separated from the electrode material 10 through the brushing step may be completely removed through the suction cleaning step.

In this case, the cleaning step for cleaning the electrode material 10 may include a step of controlling the cleaning step by the second controller C2 on the basis of the results of the vision inspection step that determines whether the electrode material 10 is of good quality or not.

That is, by controlling the appropriate selection and adjustment of the cleaning intensity or method in the cleaning step by means of the second controller C2 on the basis of the state of the electrode material 10 determined through the vision inspection step, the productivity of a good electrode material 10 may be increased.

Next, the vision inspection step for determining whether the electrode material 10 is of good quality will be described.

As shown in FIG. 5, the vision inspection step may include: a general inspection step for determining whether foreign substances remain in the electrode material 10 by means of a first vision part 410; and a step for determining whether the meander correction value obtained from the meander correction step matches by means of a second vision part 420.

First, in the general inspection step for inspecting whether foreign substances remain in the electrode material 10, foreign substances remaining in the electrode material 10 or deformation of the appearance of the notching processing area as a result of notching processing, etc., may be checked and inspected by means of the first vision part 410. Due to this, whether the electrode material 10 is of good quality may be determined.

In addition, by checking again, by means of the second vision part 420, the position where the meandering of the electrode material 10 was corrected in the first correction step, the meander position of the electrode material in the final product may be confirmed, so that the electrode material can be accurately wound on the final rewinder 2.

In this case, by measuring a meander correction value to compensate the meandering of the electrode material 10 by means of the second vision part 420, the meander correction step for the electrode material 10 in the previous step may be adjusted.

That is, the following three steps may be included: a step of controlling, by the first controller C1, the meander correction step for correcting the meandering in the movement path of the electrode material 10; a step of controlling, by the second controller C2, the step for determining whether the meander correction value obtained from the meander correction step matches the meander correction value measured by the second vision part 420; and a step of transmitting whether the meander correction values match determined under the control of the second controller C2 to the first controller C1 and adjusting the meander correction step for the electrode material 10 by the first controller C1.

The first vision part 410 and the second vision part 420 may perform the inspection by taking images using a camera, but the images may be acquired in various ways to perform general inspection and determination of whether the meander correction values match.

As shown in FIG. 6, after the meander correction step for correcting the meandering in the movement path of the electrode material 10 and before the notching processing step of forming the electrode tab shape 14 by processing the tab fabrication area of the electrode material 10, a guide step for adjusting the conveyance position of the electrode material 10 by an air guide 510; and a foreign substance suction step for removing foreign substances from the tab fabrication area of the electrode material 10 may be further included.

The guide step and the foreign substance suction step are to remove, after the meander correction of the electrode material 10 is performed, foreign substances on the surface of the electrode material 10 that is put into the first process, or to accurately guide the shape despite curling or pushing at the end of the electrode material 10 after the meander correction.

That is, the guide step of adjusting the conveyance position of the electrode material 10 by the air guide 510 may include a step of spraying air in opposite end directions (see W in the illustrated drawing) perpendicular to the conveying direction of the electrode material 10.

To be specific, first, after the meander correction of the electrode material 10, air is sprayed in the direction of opposite ends of the width direction of the electrode material 10, so that the tab fabrication area 13 of the electrode material 10 is completely spread out, and the reliability of the notching processing for the tab fabrication area 13 of the electrode material 10 that is performed thereafter may be increased.

In addition, by removing foreign substances on the surface of the electrode material 10 initially supplied from the unwinder 1 through a suction step using a suction device 520 in advance, the reliability of the electrode material 10 manufacturing for the notching step process and subsequent processes for the electrode material 10 may be increased, thereby increasing the productivity of electrodes for secondary batteries.

The final step is the electrode material 10 winding step for winding the electrode material 10 with the rewinder 2. The rewinder 2 may be formed, along with the unwinder 1, in a roller shape in which the electrode material 10 may be continuously connected and wound.

The manufacturing method of electrodes for secondary batteries according to an embodiment of the present disclosure applies a roll-to-roll technique and performs notching by the laser scanner 200, thereby enabling the entire manufacturing process to proceed at an ultra-high speed. In addition, the tension or moving speed of the electrode material 10 by the unwinder 1 and the rewinder 2 may be controlled, thereby further increasing the reliability of the manufacturing process of the electrode material 10.

Furthermore, in the process of winding the electrode material 10 onto the rewinder 2, marking for defective products may also be performed through the vision inspection step for determining whether the electrode material 10 is of good quality.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible within the scope and technical idea of the present disclosure, and it is natural that such changes and modifications fall within the scope of the appended claims.

## Claims

1. A roll-to-roll manufacturing method of electrodes for secondary batteries, the method comprising:
material supplying for supplying an electrode material from an unwinder;
meander correcting for correcting meandering in a movement path of the electrode material;
notching processing for forming an electrode tab shape by processing a tab fabrication area of the electrode material;
cleaning the electrode material;
vision inspection for determining whether the electrode material is of good quality; and
electrode material winding for winding the electrode material with a rewinder.

2. The method of claim 1, wherein the meander correction step for correcting meandering in the movement path of the electrode material comprises:
detecting a line edge position of the electrode material by an edge position sensor (EPS) and correcting meandering of the electrode material by using an edge position control (EPC) roller.

3. The method of claim 1 or 2, wherein the notching processing step for forming the electrode tab shape of the electrode material comprises:
notching the electrode material by at least one laser scanner positioned at one or both ends of a width direction of the electrode material.

4. The method of claim 3, wherein the notching processing step for forming the electrode tab shape of the electrode material comprises:
notching a tab fabrication area of a first end of the width direction of the electrode material and notching a molding portion of a second end of the width direction of the electrode material simultaneously or sequentially.

5. The method of any preceding claim wherein the cleaning the electrode material step comprises:
ultrasonic cleaning for applying ultrasonic waves to the electrode material; and
suction cleaning for sucking foreign substances from the electrode material.

6. The method of claim 5, wherein the cleaning the electrode material step comprises:
brushing for removing foreign substances from a surface of the electrode material using a brush, between the step of ultrasonic cleaning for applying ultrasonic waves to the electrode material and the step of suction cleaning for sucking foreign substances from the electrode material.

7. The method of any preceding claim , wherein the vision inspection step for determining whether the electrode material is of good quality comprises:
general inspection for determining whether foreign substances remain in the electrode material by means of a first vision part; and
determining whether a meander correction value obtained from the meander correction step matches by means of a second vision part.

8. The method of claim 7, further comprising:
controlling, by a first controller, the meander correction step for correcting the meandering in the movement path of the electrode material;
controlling, by a second controller, the step for determining whether the meander correction value obtained from the meander correction step matches a meander correction value measured by the second vision part; and
transmitting whether the meander correction values match determined under the control of the second controller to the first controller and adjusting the meander correction step for the electrode material by the first controller.

9. The method of claim 8, wherein the cleaning the electrode material step comprises:
controlling the cleaning step by the second controller on a basis of the results of the vision inspection step for determining whether the electrode material is of good quality.

10. The method of any preceding claim , further comprising:
guiding for adjusting a conveyance position of the electrode material by an air guide; and
sucking foreign substances for removing foreign substances from the tab fabrication area of the electrode material,
after the meander correction step for correcting the meandering in the movement path of the electrode material and before the notching processing step for forming the electrode tab shape by processing the tab fabrication area of the electrode material.

11. The method of claim 10, wherein the guiding for adjusting the conveyance position of the electrode material by the air guide comprises:
spraying air in opposite end directions perpendicular to a conveying direction of the electrode material.
